# EUROPEAN PATENT APPLICATION

(11) **EP 4 601 080 A1**
(43) Date of publication of application: **13.08.2025**
(21) Application number: 25156402.7
(22) Date of filing: 06.02.2025
(51) Int. Cl.: H01M 10/613, H01M 10/633, H01M 10/6556, H01M 10/6568, B60K 11/02, E01H 1/10

(54) **ELECTRICAL CLEANING MACHINE WITH BATTERY MANAGEMENT SYSTEM**

(30) Priority: 07.02.2024 NL 2036985
(71) Applicant: Ravo B.V., 1822 BW Alkmaar (NL)
(72) Inventor: PRINS, Rob, 1822 BW Alkmaar (NL); VERBEYST, Olivier Jeremi, 1822 BW Alkmaar (NL)
(74) Representative: Patent Business B.V.

(57) **Abstract**

The invention is in the field of a mobile installation for street cleaning, also referred to as a cleaning machine for a road or pavement or gutter, for removing undesirable matter from roads or like surfaces, with or without moistening of the surface. These machines are used to remove objects, such as small items, such as leaves, and debris, and dirt from a road or the like, using a broom system for cleaning the road or the like, and typically a storage for removed objects and dirt.

## Description

### FIELD OF THE INVENTION

The invention is in the field of a mobile installation for street cleaning, also referred to as a cleaning machine for a road or pavement or gutter, for removing undesirable matter from roads or like surfaces, with or without moistening of the surface. These machines are used to remove objects, such as small items, such as leaves, and debris, and dirt from a road or the like, using a broom system for cleaning the road or the like, and typically a storage for removed objects and dirt.

### RELATED APPLICATIONS

The present application claims the priority from Dutch Patent Application NL2036885, filed on February 7, 2024, in the name of RAVO B.V., The Netherlands.

The entire contents of the above-referenced applications and of all priority documents referenced in the Application Data Sheet filed herewith are hereby incorporated by reference for all purposes.

### BACKGROUND OF THE INVENTION

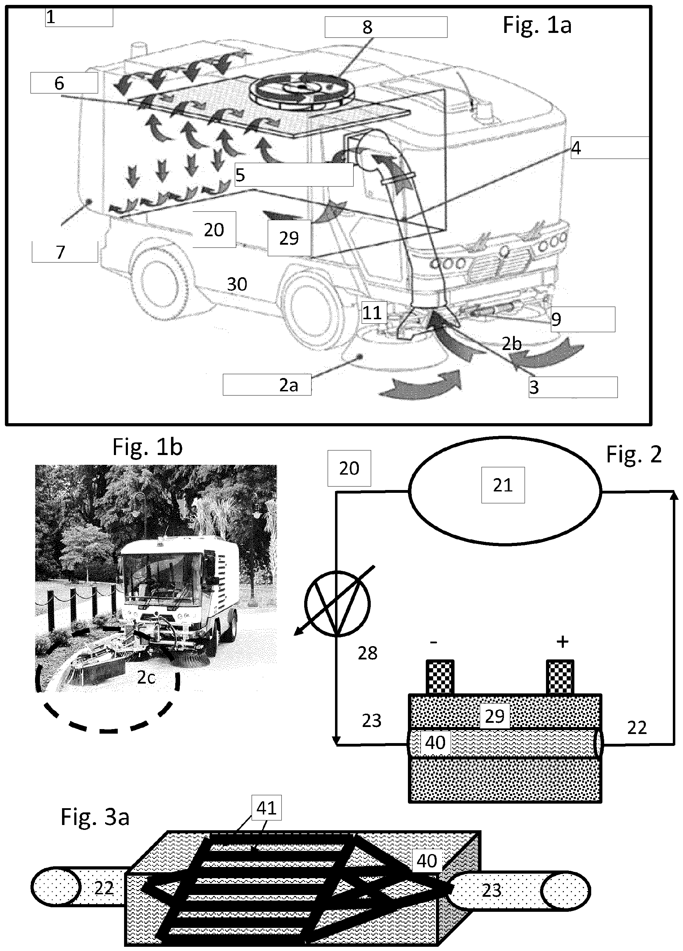

The present invention relates to a cleaning machine. A main function of such a cleaning machine is to remove dirt/debris specifically from the gutter (side of the road, edge of the pavement; curb) and to remove it from the street; dirt/debris may be understood to relate to all smaller items being present and to be up-taken. Collecting and removing the debris is typically done by means of broom(es) which sweep the debris in a direction of an uptake element, and uptake of the debris then takes place, such as by under-pressure, e.g., vacuum. Figure 1 shows an example of a prior art cleaning machine, wherein brooms, located underneath the cleaning machine and rotating, sweep the dirt/debris towards a suction mouth. The suction mouth is provided with under-pressure, thereby up-taking the dirt/debris into the machine, though a suction tube, towards a container of the machine.

For proper up-taking of dirt/debris an operator, typically the driver of the cleaning machine, uses a broom control device to move the brooms towards the dirt and debris, and at the same time steering the cleaning machine, paying attention to traffic and pedestrians, and so on. The broom control device may be a joystick or the like. The position of the entire machine is controlled by the steering controls of the driver, such as a typical steering wheel. It is found that manually and simultaneously controlling all these movements requires a high level of practice, as well as good eye-hand coordination, and concentration. In practice, there are very few operators that are skilled enough to get optimum performance of the system. Lack of accuracy of the above-described manual process may have a large impact on quality, efficiency, and speed of the cleaning work performed. Also, from an ergonomics point of view, the above is a challenging topic to address, as it is physically demanding and technically very complex to solve.

In view of government regulations on the use of carbon dioxide, particles, and soot emitting vehicles, in particular in densely populated areas such as towns, and a desire to reduce these emissions, fossil fuel free cleaning machines are now designed. However it has been found that these cleaning machines are not yet as reliable as required. In particular, battery management is found to be an issue.

Incidentally CN 216 671 751 U, WO 2023/113593 A1, and CN 217 923 321 A may be mentioned. CN 216 671 751 U discloses cleaning equipment, the cleaning equipment at least comprises a battery assembly, a clean water barrel and a cleaning head, a water outlet of the clean water barrel is connected with a first trunk, and a branch part which is divided into a first branch and a second branch is arranged at the tail end of the first trunk in the flowing direction of liquid; the battery assembly is provided with a water inlet connector and a water outlet connector, the water inlet connector is communicated with the water inlet end of the first branch, and the water outlet connector is communicated with the water outlet end of the first branch, so that the battery assembly is inserted into the first branch; and the second branch is communicated with the cleaning head. According to the technical scheme provided by the invention, the working temperature of the battery assembly can be maintained near the optimal working temperature. WO 2023/113593 A1, of the present applicant, recites a mobile installation for street cleaning, also referred to as a cleaning machine for a road or pavement or gutter, for removing undesirable matter from roads or like surfaces, with or without moistening of the surface. These machines are used to remove objects, such as small items, such as leaves, and debris, and dirt from a road or the like, using a broom system for cleaning the road or the like, and typically a storage for removed objects and dirt. CN 217 923 321 A recites a pure electric watering cart which comprises a cart body, a battery box is arranged on the lower surface of the cart body, a water tank is fixedly connected to the upper surface of the cart body, and a water inlet is fixedly connected to the upper surface of the water tank. The filtering mechanism is located in the water tank, the filtering mechanism comprises a lead screw, the side surface of the lead screw is in threaded connection with a moving sleeve, the lower surface of the moving sleeve is fixedly connected with a hollowed-out plate, the hollowed-out plate is slidably connected with the water tank, and the side surface of the hollowed-out plate is fixedly connected with a filter screen; and the salvage mechanism is located in the water inlet and comprises a supporting plate, the upper surface of the supporting plate extends out of the interior of the water inlet, salvage boxes are movably connected to the front surface and the rear surface of the supporting plate correspondingly, and salvage ropes are arranged on the side surfaces of the salvage boxes. Through the structure, impurities in water can be filtered and cleaned, and the impurities are prevented from blocking a pipeline.

The present invention therefore relates to an improved cleaning machine, which overcome one or more of the above disadvantages, without jeopardizing functionality and advantages.

### SUMMARY OF THE INVENTION

In a first aspect the present invention relates to an electrical cleaning machine 1 for a road or pavement or gutter, comprising an electric motor 30, a pack of at least one rechargeable battery 29, configured for providing electric power, in particular for powering the electric motor, and comprising a battery cooling element 40, an independent closed loop cooling system 20, for cooling the pack of at least one rechargeable battery, the cooling system comprising a reservoir 21 comprising water, and at least one supply tube 23, fluidly connecting the reservoir to the battery cooling element 40, for transferring the water from the reservoir 21 to the battery cooling element 40, and at least one return tube 22, fluidly connecting the battery cooling element 40 back to the reservoir 21, configured for cooling the pack of at least one battery 29. Reference can be made to fig. 1a and fig. 2. The present cleaning machine is of the electrical type, that is, comprising an electrical motor which is used for driving the machine, and for providing power to other parts of the machine. In order to have power on board a pack of at least one battery is provided, for providing electrical energy, which at least one battery is rechargeable, such that when required the battery can be reloaded with electrical power. The pack comprises a battery cooling element; in use the battery produces heat, e.g. to imperfections in power transfer and power generation. For improved performance the pack is best cooled, e.g. to an environmental temperature, or even below said temperature. The battery cooling element is in fluid connection with a cooling system, the cooling system comprising water for cooling the pack. Thereto tubing is provided, for flowing water to and from the pack and to the water reservoir. These electrical components, and the cooling system, are integrated into the electrical cleaning machine, typically within the housing of said machine. Therewith good cooling is provided, leading to prolonged use of the cleaning machine, typically by 10% more compared to a system without such a cooling, less or later returns to the base station, e.g. for loading the batteries, and so on. Batteries may be selected from secondary electrochemical cells, such as solid state and liquid (ion) electrochemical batteries. Such a cell is capable of generating electrical energy from (electro)chemical reactions or using electrical energy to cause (electro)chemical reactions, such as when recharged. The electro-chemical cells which generate an electric current are called voltaic cells or galvanic cells and those that generate chemical reactions, via electrolysis for example, are called electrolytic cells. The present invention is focused on galvanic cells, such as a battery. A battery may consist of one or more cells. Cells can be connected in parallel, in series, or a combination thereof. When discharged/recharged such a cell effectively is both a galvanic cell and an electrolytic cell. It is used to store electric energy upon charging, and to deliver electric energy during discharging. Typical density characteristics are a specific energy density of up to 250 Wh/kg, a volumetric energy density of up to 700 Wh/l, and a specific power density of up to 1500 W/kg, and a weight of 300-1500 kg, typically 500-1000 kg. Typical battery characteristics during use are e.g. temperature of the battery or individual components thereof, remaining power, e.g. in terms of Ah, voltage, current density, remaining energy density, remaining power density, number of load and discharge cycles, life expectancy, etc. Thereto the present cleaning machine may be provided with one or more sensors, the one or more sensors being configured to provide input to the controller and/or present computer program, in particular a voltage sensor, a current sensor, a power sensor, a remaining power sensor or indicator, a battery temperature sensor, and so on. Suitable battery types are single valence-ion batteries, such as Li-ion batteries, such as LiFePO₄ (LFP), and mixed metal oxide batteries, such as Li-Nickel Manganese Cobalt Oxides (LiNiₓMn_{y}Co_{1-x-y}O₂). It is noted that an increase in temperature of the pack of at least one battery is typically limited, in particular when cooled. When cooling is stopped, for whatever reason, the present electrical cleaning machine can still be in operation for a prolonged period of time, such as >30 minutes, without much concern in view of operation. It is further noted that the specific heat capacity of the pack of at least one battery is (in addition to the cooling) also quite substantial. Typically the present cleaning machine (1) comprises a vehicle, the vehicle typically comprising at least one with respect to the vehicle vertically and horizontally movable broom system, at least one front wheel, in particular two front wheels, and at least one rear wheel, in particular two rear wheels, wherein the vehicle comprises at least one seat for an operator, at least one controller for moving said broom system, and wherein the at least one controller is adapted to move the broom-system sideways with respect to the vehicle such that a distance between the broom system and side of the road is controlled. Therewith the cleaning machine is better controlled, is capable of following curves, curbs, gutter, and sides of a road more accurate, and is capable of removing dirt, dust, and the like effectively. The at least one vertically and horizontally movable broom system is typically provided on a right side of the cleaning machine in countries where vehicles drive at a right side of the road, or in the alternative on the left side. A second broom may typically be provided at the other (left or right) side. So, each broom system may comprise one broom, two brooms, or more than two brooms, such as three brooms. Therewith significant improvements are achieved. A reliable, automated broom positioning system is found to have a positive effect on quality, efficiency, speed, and ergonomic aspects of the work performed. For improved range and added functionality, an option is to use the third broom system. This option provides an increased sweeping width/range and is often used with a dedicated broom for weed removal. Operating this third broom typically has similar requirements as the first and second brooms: it may be too far from the curb and thereby dirt/debris is missed/not picked up, it may be too close to the curb and the wires of the broom are pushed flat, the broom does not move the dirt effectively. Operation of the third broom may be done by a second joystick, in addition to the standard controls. For the operator this implies operating two joysticks simultaneously; operating/movement of this 3rd broom is very frequent. The construction of the third broom is typically similar to the first and second broom system: the position of the third broom relative to the machine, controlled by the so-called "third broom side-shift", this is a linear movement, perpendicular to the length axis of the machine (driving direction). And the distance between the machine itself and the curb is controlled.

In a second aspect the present invention relates to a computer program comprising instructions for operating the electrical cleaning machine 1 according to the invention, when loaded on a computer, the instructions causing the computer to carry out: determining a temperature value of the pack of at least one rechargeable battery, determining a water level value in the reservoir, processing the determined values, and configured to compare the value of the temperature of the pack of at least one rechargeable battery with a predetermined battery pack temperature value, and to compare the value of the water level in the reservoir with a predetermined water level value, and to identify battery pack temperature characteristics and characteristics of the water level in the reservoir, increasing or decreasing a water flow between the reservoir and the pack of at least one rechargeable battery by controlling the water flow from the reservoir, wherein the water flow is increased when the pack of at least one rechargeable battery reaches a temperature above a critical temperature value, and wherein the water flow is decreased when the pack of at least one rechargeable battery has a temperature less than an optimal temperature value, providing a signal when the value of the water level in the reservoir is below a critical water level value, below which critical water value the water level in the reservoir is not sufficient to cool the pack of at least one rechargeable battery, therewith obtaining a feedback control system. Typical characteristics of the water level in the reservoir are e.g. volume of water, temperature of water, and volume left to be used without jeopardizing functionality of the cleaning machine. Thereto the present cleaning machine may be provided with one or more sensors, the one or more sensors being configured to provide input to the controller and/or present computer program, in particular a water level sensor, a temperature sensor, and so on. As such control of the power supply and the pack of at least one battery is provided. The term "optimal" is used to indicate a temperature range wherein the pack or likewise the battery performs optimal or close to optimal, that is having an efficiency of >80% relative, and typically > 90% relative; the term "critical" is sued to indicate that in view of operation of the cooling element, or likewise of the battery, or likewise of provision of water for cleaning, operation could still be continued but is best corrected, such as by reducing or stopping the respective operation,

Thereby the present invention provides a solution to one or more of the above-mentioned problems.

Advantages of the present invention are detailed throughout the description.

### DETAILED DESCRIPTION OF THE INVENTION

The present invention relates in a first aspect to a cleaning machine according to claim 1.

In an exemplary embodiment the present cleaning machine further comprises a water outlet 11 in fluid connection with the reservoir 21, for spraying water on the road or pavement or gutter. Such an outlet may be used to prevent dust formation, and to improve uptake of dirt and debris. This is a big advantage, as the same reservoir can independently be used for two functions, namely cooling and dust prevention.

In an exemplary embodiment the present cleaning machine further comprises at least one first pump 28 for circulating water through the cooling system. By providing a pump better cooling is achieved, as well as prolonged use of water, or likewise, water consumption is reduced.

In an exemplary embodiment of the present cleaning machine the battery cooling element comprises a multitude of parallel and/or serial cooling tubes, in particular each cooling tube in fluidic connection with the at least one supply tube 23 and with the at least one return tube 22. An example thereof is given, schematically, in fig. 3a.

In an exemplary embodiment of the present cleaning machine the battery cooling element (40) comprises at least one cooling tube (41) in fluidic connection with the at least one supply tube (23) and with the at least one return tube (22), which at least one cooling tube comprises a plurality of backwards and forwards bends, in particular 2-20 bends, more in particular sinusoidal bends, such as a meander, wherein the cooling element preferably comprises a metal incorporating said at least one cooling tube or forming said cooling tube, in particular wherein a top side of the metal has a smaller thickness t1 than a lower side of the metal t2, such as wherein t1 is from 3-20 mm, and t2 is from 4-30 mm. The metal is preferably a metal with a high thermal conductivity, of e.g. > 100 W/m*K (@ 20 °C), such as aluminum. The metal may also be an alloy.

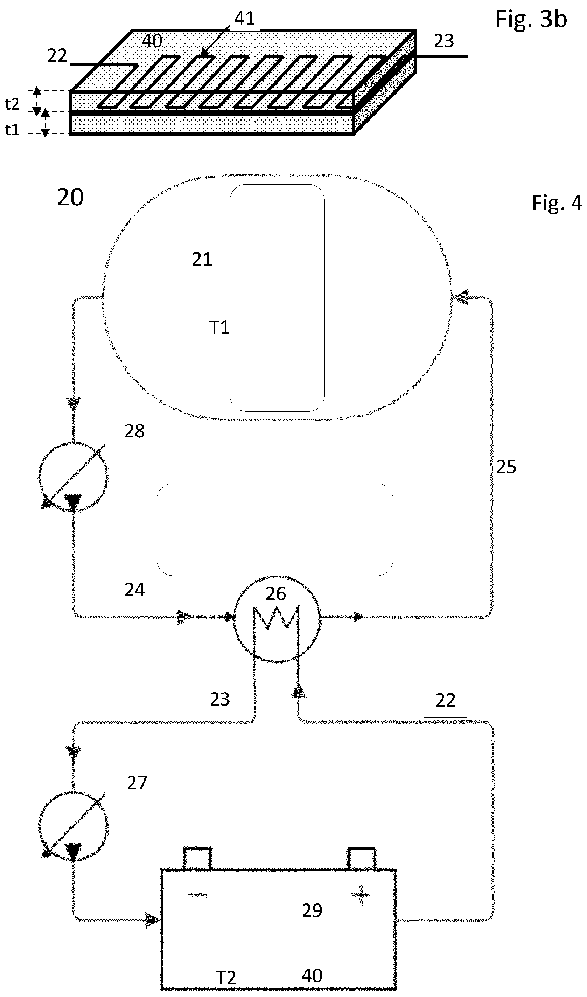

In an exemplary embodiment of the present cleaning machine the closed loop cooling system 20 comprises a first sub-loop, the first sub-loop comprising a first side of a heat exchanger 26 in fluid connection with a heat exchanger supply fluid connection 24 and with a heat exchanger return fluid connection 25, at least one first pump 28 for circulating water through the first sub-cooling system, in particular at least one first adaptable circulation pump, and a second sub-loop, the second sub-loop comprising a second side of the heat exchanger 26 in fluid connection with the battery supply fluid connection 23 and with the battery return fluid connection 22, and at least one second pump 27 for circulating water through the second sub-cooling system, in particular at least one second adaptable circulation pump (see e.g. fig. 4). It has been found that by providing two or more sub-loops, and a heat exchanger, the cooling efficiency is improved, in particular on warmer days.

In an exemplary embodiment of the present cleaning machine the cooling system further comprises a feedback control system, configured to provide a signal when the amount of water in the reservoir is reduced below a critical level, in particular below 10% of a volume of the reservoir, more in particular below 5% of a volume of the reservoir. It has been found important to control the amount of water, first of all to prevent empty reservoirs as far as possible, or necessary, and further to provide sufficient cooling.

In an exemplary embodiment the present cleaning machine further comprises a movable broom system 2, for cleaning the road or pavement or gutter, at least one broom controller for moving the broom system, in particular wherein the controller is adapted to move the broom-system sideways such that a distance between the broom system and side of the road is controlled, and/or wherein the controller is adapted to move the vehicle sideways such that a distance between the broom system and side of the road is controlled, in particular wherein the controller is configured to maintain the distance between the broom system and side of the road at a constant value within a predetermined limit, and/or wherein the controller adapts the distance in view of broom wear, and/or further comprising a second broom system, and optionally a third broom system, wherein the broom system us configured to sweep debris and dirt to a suction point, such as by rotating.

In an exemplary embodiment of the present cleaning machine brooms are adapted to move with respect to the cleaning-machine in a horizontal direction and/or vertical direction, preferably move each broom individually, and preferably move each broom independent in the horizontal and vertical direction.

In an exemplary embodiment the present cleaning machine comprises a suction system 3,4,8 for up-taking debris and dirt from the road or pavement or gutter, from a suction point 3, such as a suction opening, wherein the suction point is connected to a suction tube 4, and wherein the other end of the suction tube is connected to a container 5 for receiving the dirt and debris, the suction system further comprising a fan 8 for providing suction, such as by under-pressure, wherein the fan is configured to provide a suction power pressure of -70 kPa to - 1 kPa, in particular -30 kPa to -2 kPa, more in particular -20 kPa- -5 kPa, such as -6- 3kPa.

In an exemplary embodiment of the present cleaning machine the fan is configured to provide a suction such that debris or dirt is up taken through the suction tube with a speed of 1-100 m/sec, in particular 5-40 m/sec, and/or wherein the fan is adapted to reduce noise by 3-20 dB, in particular 5-8 dB.in particular wherein suction is decreased in case of low density objects by 1-20 kPa, and wherein the suction is increased in case of high density objects, such as in case of sand, pebble, and dirt, by -1 to -20 kPa, in particular comprising at least one suction power controller configured to increase or decrease suction by controlling said fan in view of the physical characteristics of debris and dirt to be up taken by the suction point, wherein suction is decreased in case of low density objects, and wherein the suction is increased in case of high density objects, and/or wherein the cleaning machine comprises at least one ventilation opening, and an outlet, preferably comprising a filter for removing small particles, and/or further comprising a display.

In an exemplary embodiment the present cleaning machine comprises at least one front wheel, in particular two front wheels, and at least one rear wheel, in particular two rear wheels.

In an exemplary embodiment of the present cleaning machine the reservoir 21 has a volume of 0.1-1 m³, in particular 0.2-0.8 m³, more in particular 0.3-0.6 m³, so with a limited water supply both cooling and prevention of dust forming is obtained, and/or wherein the cooling system provides a flow of 1-50 l/min, in particular 2-20 l/min, such as 5-10 l/min, and/or
wherein the cleaning machine has a height of 1.5-2.5 meter, and/or
wherein the cleaning machine has a width of 1.5-3 meter, and/or
wherein the cleaning machine has a length of 2.5-7.5 meter, that is, the present cleaning machine may be considered to relate to small truck like vehicles, and/or
wherein the cleaning machine comprises a cabin for at least one person, in particular a driver, the at least one person for operating the cleaning machine.

In an exemplary embodiment the present cleaning machine further comprises at least one cooling system controller, wherein the cooling system controller is configured to determine a temperature value of the pack of at least one rechargeable battery, determine a water level value in the reservoir, process the determined values, and based on the determined values, to maintain or to adapt the cooling of the pack of the at least one rechargeable battery, in particular by increasing or decreasing a water flow through the cooling system. Therewith advanced and dedicated cooling of the battery is obtained.

In an exemplary embodiment of the present cleaning machine brooms are adapted to sweep debris and dirt to a suction point, such as by rotating.

In an exemplary embodiment of the present cleaning machine brooms are adapted to move with respect to the cleaning-machine in a horizontal direction and/or vertical direction, preferably move each individually, and preferably move independent in the horizontal and vertical direction.

In an exemplary embodiment of the present cleaning machine the cleaning machine comprises a suction system for up-taking debris and dirt from the suction point, such as an enlarged suction opening, connected to the suction opening a suction tube, at the other end of the suction tube a container for receiving dirt and debris, and a fan for providing suction, such as by under-pressure.

The invention is further detailed by the accompanying figures and examples, which are exemplary and explanatory of nature and are not limiting the scope of the invention. To the person skilled in the art it may be clear that many variants, being obvious or not, may be conceivable falling within the scope of protection, defined by the present claims.

### SUMMARY OF THE FIGURES

Figure 1a,b show an exemplary embodiment of the present machine.
Figures 2 shows a cooling system.
Fig. 3a,b show an expansion of a battery cooling element.
Fig. 4 shows an advanced cooling system.

### DETAILED DESCRIPTION OF THE FIGURES

In the figures:
- 1: Cleaning machine
- 2: moveable broom system 2a,2b and 2c
- 2a: first right hand broom
- 2b: optional second left hand broom
- 2c: optional third broom
- 3: suction mouth
- 4: suction tube
- 5: container
- 6: filter
- 7: outlet
- 8: suction fan
- 9: side shift
- 11: sprayer
- 20: cooling system
- 21: spray water tank
- 22: battery return cooling fluid connection
- 23: battery supply cooling fluid connection
- 24: heat exchanger supply cooling fluid connection
- 25: heat exchanger return cooling fluid connection
- 26: heat exchanger
- 27: second pump
- 28: first pump
- 29: battery
- 30: electrical motor
- 40: battery cooling element
- 41: cooling tube
- t1: thickness top metal
- t2: thickness bottom metal

Figure 1a show an exemplary embodiment of the present machine.

Figures 1b shows a third broom system, indicated with a circle.

The figures are further detailed in the description and examples below.

The present cleaning machine takes over a significant part of the manual control of several functions of the sweeper, during sweeping operation. This reliefs the driver of a difficult, tiring task.

In an example the present modification is designed and integrated in the sweeper, leaving all existing/present functions of e.g. the Ravo type 5 machine otherwise unchanged. Controlling these functions can still be performed manually, but also an automatic mode is available.

The present sweeper, or streetsweeper, can best be described as a large domestic vacuum cleaner. All typical components of a vacuum cleaner are typically there: an engine driving a (centrifugal) fan that creates vacuum, thus creating air movement in a suction nozzle that picks up dirt/debris. Through a (suction)tube the airflow transports the dirt/debris into the dirt/debris container (See figure 1). To be able to work on a road surface, the machine typically meets a number of road-specific requirements: (i) it provides sufficient cleaning width: as the width of the suction nozzle is typically only 30 cm, this is too narrow to deliver efficient cleaning. To increase the cleaned surface width, brooms are added, that move dirt/debris from both sides (L+R) to the center of the machine, where the suction nozzle is located (See figure 1); (ii) as a standard two brooms (L+R) are typically provided, which result in a total sweeping width of approximately 2 meters; (iii) an optional third 3rd broom is provided for an increased width with approximately 70 - 90 cm extra. It also provides an increased flexibility to reach into corners and other hard to reach areas, (iv) As the brooms typically use a certain force on the ground, that is kept more or less constant, independent from shape of the roadsurface, speed-bumps and broom wear (a worn broom weighs less than a new one)
This load-regulating system is based on a spring-loaded mechanism; (v) The brooms are best kept in a rather precise position relative to the side of the road and/or curb to function properly; when they are too far from the curb dirt/debris may be missed, when they are too close to the curb hairs/wires from the broom may be pushed flat to the surface, and the broom may not work properly. This relative position is typically determined by two factors: The position of the entire machine; this may be controlled by the driver/operator, steering the machine towards- or away from the curb (normal/standard steering function of the vehicle); The position of the 2 standard brooms, relative to the machine; to provide easy, fast position changing of the brooms, vertically and horizontally movable broom system onto which these brooms are preferably mounted on a sub-frame ("broom carriage") that can move sideways (perpendicular to the driving direction of the vehicle); this system is called "side-shift" and enables the brooms to be positioned closer or further away to the curb. This side-shift, and the relative position of the broom with respect to the machine is controlled with a sensor, the sensor measuring the relative position and capable of adapting the relative position. This movement is controlled by hand, with a controller, by the operator. Electrical signals from the joystick (part of the controller) are connected to the computer controlling the machine (PLC); this PLC in its turn sends electrical signals to the hydraulic valves (operator, joystick). The physical movement of the entire broom carriage is typically powered by a hydraulic cylinder (See figure 1); (vi) The principle of operating the 3rd broom is identical to that of the standard brooms, but it is mounted on a separate frame and thus able to function independent from the standard brooms.

The above describes functionality of the present sweeper, relating to proven Ravo 5 technology.

The integration of the present invention into the Ravo 5 machine may be done mainly electrically, such as through software, or by adding an electrical function to an existing (hydraulic) component. An example of the latter is an additional, electrically controlled steering function. This allows the electronic machine control to influence the mechanical/hydraulic steering unit, thus creating automated steering. Therewith the present vehicle does not hit the side of the road as a consequence, in particular with a rear side of the cleaning machine.

The electrical machine further comprises a cooling system 20, electrical motor 30, and battery 29, and optionally further elements of the invention as claimed.

Fig. 2 shows a relatively simple cooling system 20, with therein a spray water tank 21, a battery return cooling fluid connection 22, a battery supply cooling fluid connection 23, a first pump 28, a battery 29, and a battery cooling element 40. Therewith the battery can be cooled sufficiently, as described.

Fig. 3a then shows an example of multiple parallel (5) cooling elements, of which two are provided. These elements may further be provided in series, in addition, or as an alternative. A return fluid connection 22 and supply connection 23 are shown. The pump may be provided at any location in the fluid system.

Fig. 3b shows a cooling element with one meandering tube 41 in between return fluid connection 22 and supply connection 23. The colling element may be constructed from two metal plates, having thicknesses t1 and t2, respectively, wherein t2 typically is larger than t1, or may be incorporated between said plates, typically metal plates. A suitable metal is aluminum. Cooling element 40 is typically in thermal contact with the pack of at least one battery.

Fig. 4 shows an advanced layout of cooling system 20, with a first sub-loop, the first sub-loop comprising a first side of a heat exchanger (26) in fluid connection with a heat exchanger supply fluid connection (24) and with a heat exchanger return fluid connection (25), at least one first pump (28) for circulating water through the first sub-cooling system, in particular at least one first adaptable circulation pump, and a second sub-loop, the second sub-loop comprising a second side of the heat exchanger (26) in fluid connection with the battery supply fluid connection (23) and with the battery return fluid connection (22), and at least one second pump (27) for circulating water through the second sub-cooling system, in particular at least one second adaptable circulation pump. Therewith the battery can be cooled sufficiently, as described, and even better, in view of the heat exchanger.

## Claims

1. An electrical cleaning machine (1) for up-taking of dirt and/or debris from a road, pavement, or gutter, comprising
- an electric motor (30) for driving the electrical cleaning machine,
- a pack of at least one rechargeable battery (29), configured for providing electric power, in particular for powering the electric motor, and comprising a battery cooling element (40),
- an independent closed loop cooling system (20), for cooling the pack of at least one rechargeable battery, the cooling system comprising
∘ a reservoir (21) comprising water, and
∘ at least one supply tube (23), fluidly connecting the reservoir to the battery cooling element (40), for transferring the water from the reservoir (21) to the battery cooling element (40), and at least one return tube (22), fluidly connecting the battery cooling element (40) back to the reservoir (21), configured for cooling the pack of at least one battery (29).

2. The electrical cleaning machine (1) according to claim 1, further comprising
- a water outlet (11) in fluid connection with the reservoir (21), for spraying water on the road or pavement or gutter.

3. The electrical cleaning machine (1) according to any of claims 1-2, further comprising at least one first pump (28) for circulating water through the cooling system.

4. The electrical cleaning machine (1) according to any of claims 1-3, wherein the battery cooling element (40) comprises a multitude of parallel and/or serial cooling tubes (41), each cooling tube in fluidic connection with the at least one supply tube (23) and with the at least one return tube (22), and/or
wherein the battery cooling element (40) comprises at least one cooling tube (41) in fluidic connection with the at least one supply tube (23) and with the at least one return tube (22), which at least one cooling tube comprises a plurality of backwards and forwards bends, in particular 2-20 bends, more in particular sinusoidal bends, such as a meander, wherein the cooling element preferably comprises a metal incorporating said at least one cooling tube or forming said cooling tube.

5. The electrical cleaning machine (1) according to any of claims 1-4, wherein the closed loop cooling system (20) comprises
a first sub-loop, the first sub-loop comprising a first side of a heat exchanger (26) in fluid connection with a heat exchanger supply fluid connection (24) and with a heat exchanger return fluid connection (25), at least one first pump (28) for circulating water through the first sub-cooling system, in particular at least one first adaptable circulation pump, and
a second sub-loop, the second sub-loop comprising a second side of the heat exchanger (26) in fluid connection with the battery supply fluid connection (23) and with the battery return fluid connection (22), and at least one second pump (27) for circulating water through the second sub-cooling system, in particular at least one second adaptable circulation pump.

6. The electrical cleaning machine (1) according to any of claims 1-5, wherein the cooling system further comprises a feedback control system, configured to provide a signal when the amount of water in the reservoir is reduced below a critical level, in particular below 10% of a volume of the reservoir, more in particular below 5% of a volume of the reservoir.

7. The electrical cleaning machine (1) according to any of claims 1-6, further comprising
a movable broom system (2), for cleaning the road or pavement or gutter,
at least one broom controller for moving the broom system, in particular wherein the controller is adapted to move the broom-system sideways such that a distance between the broom system and side of the road is controlled, and/or wherein the controller is adapted to move the vehicle sideways such that a distance between the broom system and side of the road is controlled, in particular wherein the controller is configured to maintain the distance between the broom system and side of the road at a constant value within a predetermined limit, and/or wherein the controller adapts the distance in view of broom wear, and/or further comprising a second broom system, and optionally a third broom system,
wherein the broom system us configured to sweep debris and dirt to a suction point, such as by rotating, and/or wherein brooms are adapted to move with respect to the cleaning-machine in a horizontal direction and/or vertical direction, preferably move each broom individually, and preferably move each broom independent in the horizontal and vertical direction, and/or
a suction system (3,4,8) for up-taking debris and dirt from the road or pavement or gutter, from a suction point (3), such as a suction opening, wherein the suction point is connected to a suction tube (4), and wherein the other end of the suction tube is connected to a container (5) for receiving the dirt and debris, the suction system further comprising a fan (8) for providing suction, such as by under-pressure, wherein the fan is configured to provide a suction power pressure of -70 kPa to -1 kPa, in particular -30 kPa to -2 kPa, more in particular - 20 kPa- -5 kPa, such as -6- 3kPa, and/or wherein the fan is configured to provide a suction such that debris or dirt is up taken through the suction tube with a speed of 1-100 m/sec, in particular 5-40 m/sec, and/or wherein the fan is adapted to reduce noise by 3-20 dB, in particular 5-8 dB.in particular wherein suction is decreased in case of low density objects by 1-20 kPa, and wherein the suction is increased in case of high density objects, such as in case of sand, pebble, and dirt, by -1 to -20 kPa, in particular comprising at least one suction power controller configured to increase or decrease suction by controlling said fan in view of the physical characteristics of debris and dirt to be up taken by the suction point, wherein suction is decreased in case of low density objects, and wherein the suction is increased in case of high density objects, and/or
wherein the cleaning machine comprises at least one ventilation opening, and an outlet, preferably comprising a filter for removing small particles, and/or further comprising a display, and/or
comprising at least one front wheel, in particular two front wheels, and at least one rear wheel, in particular two rear wheels.

8. The electrical cleaning machine (1) according to any of claims 1-7,
wherein the reservoir (21) has a volume of 0.1-1 m³, in particular 0.2-0.8 m³, more in particular 0.3-0.6 m³, and/or
wherein the cooling system provides a flow of 1-50 l/min, and/or
wherein the cleaning machine has a height of 1.5-2.5 meter, and/or
wherein the cleaning machine has a width of 1.5-3 meter, and/or
wherein the cleaning machine has a length of 2.5-7.5 meter, and/or
wherein the cleaning machine comprises a cabin for at least one person, in particular a driver, the at least one person for operating the cleaning machine.

9. The electrical cleaning machine (1) according to any of claims 1-8, comprising at least one cooling system controller, wherein the cooling system controller is configured to
determine a temperature value of the pack of at least one rechargeable battery,
determine a water level value in the reservoir,
process the determined values, and
based on the determined values, to maintain or to adapt the cooling of the pack of the at least one rechargeable battery, in particular by increasing or decreasing a water flow through the cooling system.

10. A computer program comprising instructions for operating the electrical cleaning machine (1) according to any of claims 1-9, when loaded on a computer, the instructions causing the computer to carry out:
- instructing the controller to determine a temperature value of the pack of at least one rechargeable battery,
- instructing the controller to determine a water level value in the reservoir,
- processing the determined values, and configured to compare the value of the temperature of the pack of at least one rechargeable battery with a predetermined battery pack temperature value, and to compare the value of the water level in the reservoir with a predetermined water level value, and to identify battery pack temperature characteristics and characteristics of the water level in the reservoir, in particular wherein characteristics of the water level in the reservoir are selected from at least one of volume of water, temperature of water, and volume left to be used without jeopardizing functionality of the cleaning machine, and in particular wherein battery characteristics are selected from at least one of temperature of the battery or individual components thereof, remaining power, left Ah, voltage, current density, remaining energy density, remaining power density, number of load and discharge cycles, and life expectancy,
- instructing the at least one first pump (28) to increase or decrease a water flow between the reservoir and the pack of at least one rechargeable battery by controlling the water flow from the reservoir, wherein the water flow is increased when the pack of at least one rechargeable battery reaches a temperature above a critical temperature value, and wherein the water flow is decreased when the pack of at least one rechargeable battery has a temperature less than an optimal temperature value,
- providing a signal to the controller when the value of the water level in the reservoir is below a critical water level value, below which critical value the water level in the reservoir is not sufficient to cool the pack of at least one rechargeable battery,
- therewith obtaining a feedback control system.
